(19) **Europäisches Patentamt**

**European Patent Office**

**Office européen des brevets**

(11) **EP 0 950 681 B1**

(12) **EUROPEAN PATENT SPECIFICATION**

(45) Date of publication and mention
of the grant of the patent:
**31.07.2002 Bulletin 2002/31**

(51) Int Cl.[7]: **C08J 5/18**, B32B 27/36,
B29C 55/12, C08K 3/00,
C08K 5/00, C08K 7/00,
C08L 67/02, G11B 5/73
// (C08L67/02, B29K67:00,
B29L7:00, 9:00)

(21) Application number: **98950406.3**

(22) Date of filing: **27.10.1998**

(86) International application number:
**PCT/JP98/04855**

(87) International publication number:
**WO 99/21911 (06.05.1999 Gazette 1999/18)**

(54) **BIAXIALLY ORIENTED POLYESTER FILM AND MAGNETIC RECORDING MEDIA CONTAINING THE FILM AS THE BASE**

BIAXIAL ORIENTIERTE POLYESTERFOLIE UND MAGNETISCHES AUFZEICHNUNGSMEDIUM DIE DIESE ALS BASISFOLIE ENTHÄLT

FILM DE POLYESTER A ORIENTATION BIAXIALE ET SUPPORT D'ENREGISTREMENT CONTENANT CE FILM EN TANT QUE BASE

(84) Designated Contracting States:
**DE FR GB LU**

(30) Priority: **29.10.1997 JP 29689597**

(43) Date of publication of application:
**20.10.1999 Bulletin 1999/42**

(73) Proprietor: **TEIJIN LIMITED**
**Osaka-shi Osaka 541-0054 (JP)**

(72) Inventors:
• **OGAWA, Tatsuya, Teijin Ltd**
**Sagamihara-shi, Kanagawa 229-1105 (JP)**

• **WATANABE, Hideaki, Teijin Limited**
**Sagamihara-shi, Kanagawa 229-1105 (JP)**

(74) Representative: **Hallybone, Huw George et al**
**Carpmaels and Ransford,**
**43 Bloomsbury Square**
**London WC1A 2RA (GB)**

(56) References cited:
**EP-A- 0 453 276       EP-A- 0 612 790**
**EP-A- 0 811 653       EP-A- 0 888 884**
**JP-A- 7 011 020       JP-A- 7 117 119**
**JP-A- 9 249 754       JP-A- 10 166 533**

**Description**

The present invention relates to a biaxially oriented polyester film and to a magnetic recording medium comprising the same as a base film. More specifically, it relates to a biaxially oriented polyester film which has excellent winding property, abrasion resistance and travel durability, which can be produced at a low cost and which is particularly useful as a base film for a magnetic recording medium for a high-speed duplicator and to a magnetic recording medium comprising the same as a base film.

A biaxially oriented polyester film typified by a polyethylene terephthalate film is widely used as a base film for a magnetic recording medium such as a magnetic tape on account of its excellent physical and chemical properties.

Of its applications to magnetic tapes, the production of tapes in which software such as movie is recorded in advance has been greatly increased lately. Heretofore, there had been employed a system for duplicating software from a master VTR to several thousands of VTRs at a high speed. However, there has recently been employed a system for transferring recorded software by placing an unrecorded magnetic tape upon a master tape in which the software has been recorded, applying a magnetic field to the tapes and heating them. In this case, the duplicating speed is very high, whereby not only requirements for a magnetic tape but also requirements for a base film for this high-speed duplicator have been changing. The requirements include, for example, winding property at the time of winding a film at a high speed, surface flatness for improving not only the adhesion of an unrecorded tape to a master tape but also electromagnetic conversion characteristics, and improved abrasion resistance against a guide roll with which a film is brought into contact at the time of duplication.

Conventionally, inert particles having a large particle diameter have been added to a base film for a magnetic recording medium to improve winding property and air-squeeze property. However, if such inert particles are contained in the base film in large quantities, protrusions are formed on the surface of a magnetic layer, whereby the surface properties of the magnetic layer of a magnetic tape greatly deteriorate because the protrusions formed by the large inert particles are transferred to the magnetic layer when the base film and the magnetic layer are wound together with one placed upon the other. The large-sized inert particles are abraded and generate white powders when coming into contact with the guide roll, thereby causing a drop-out.

Further, a cassette half or guide pin whose surface is badly finished for the purpose of reducing costs or a plastic guide pin is used these days. This trend make the requirements for the abrasion resistance and travel durability of a magnetic tape strict, and the improvement of these properties is demanded more greatly than before.

JP-A 3-239731 discloses a biaxially oriented polyester film which comprises (A) crosslinked polymer particles having a weight reduction rate after 30 minutes of a treatment at 300°C of 30 wt% or less, an average particle diameter of 0.05 to 3 μm and ethylene glycol units, (B) particles whose average particle diameter is less than 0.7 times as large as that of the particles (A) and/or (C) particles whose average particle diameter is at least 1.4 times as large as that of the particles (A). There is no disclosure of a biaxially oriented polyester film containing all of the particles (A), (B) and (C) in this publication.

JP-A 7-169031 discloses a biaxially oriented laminate polyester film. One layer (layer A) of this laminate polyester film may contain 0.1 to 0.5 wt% of small-sized particles selected from either amorphous titanium oxide having an average particle diameter of 0.05 to 0.3 μm or θ-type titanium oxide having the same, in addition to 0.05 to 0.5 wt% of medium-sized inert particles having an average particle diameter of 0.4 to 0.9 μm and 0.001 to 0.05 wt% of large-sized inert particles having an average particle diameter of 1.0 to 1.5 μm. The layer A is characterized by having a thickness of 0.5 to 2.0 μm. There is no disclosure of a single layer film in this publication.

JP-A 7-252408 discloses a biaxially oriented polyester film made from a polyester composition which comprises 0.05 to 3 wt% of inorganic particles A having a Mohs hardness of 6 or more and an average particle diameter of 0.05 to 0.5 μm, 0.05 to 3 wt% of inorganic particles B having a Mohs hardness of less than 6 and an average particle diameter of 0.1 to 1.0 μm, which is larger than that of the particles A, and 0.05 to 3 wt% of crosslinked polymer particles C having an average particle diameter of 0.1 to 1.0 μm, which differs from the average particle diameter of the particles B by 0.3 μm or less. This biaxially oriented polyester film contains a relatively large amount (lower limit is 0.05 wt%) of the crosslinked polymer particles, which are large particles.

It is an object of the present invention to provide a biaxially oriented polyester film.

It is another object of the present invention to provide a biaxially oriented polyester film which has excellent high-speed winding property, base surface flatness and abrasion resistance as well as satisfactory abrasion resistance and travel durability against an inferior cassette half or guide pin.

It is still another object of the present invention to provide a biaxially oriented polyester film which is useful as a base film for a magnetic tape for a high-speed duplicator.

It is still another object of the present invention to provide a biaxially oriented laminate polyester film which has the same characteristic properties as those of the above biaxially oriented polyester film of the present invention as well as excellent electromagnetic conversion characteristics, which can be produced at a low production cost and which is excellent in total performance.

Other objects and advantages of the present invention will become apparent from the following description.

According to the present invention, firstly, the above objects and advantages of the present invention are attained by a biaxially oriented polyester film (may be referred to as "single-layer polyester film of the present invention" hereinafter) of a polyester composition which comprises:

a) more than 0.0005 wt% and less than 0.001 wt% of crosslinked polymer particles having an average particle diameter $d_A$ of 0.8 to 1.6 μm and an apparent young's modulus of 10 to 100 kgf/mm$^2$;

b) 0.1 to 0.8 wt% of inert particles having an average particle diameter $d_B$ of 0.4 to 0.8 μm; and

c) 0.05 to 1.0 wt% of inert inorganic particles having an average particle diameter $d_C$ of 0.01 to 0.3 μm,

wherein the film satisfies the following expressions (1) and (2):

$$1.5 \leqq d_A/d_B \leqq 3 \qquad (1)$$

wherein $d_A$ and $d_B$ are defined the same as above,

$$SRz/SRa \geqq 20 \qquad (2)$$

wherein SRz is the three-dimensional 10-point average roughness of the film surface and SRa is the three-dimensional center plane average roughness of the film surface,

and the inert inorganic particles having an average particle diameter $d_C$ have a Mohs hardness of at least 7.

Secondly, the above objects and advantages of the present invention are attained by a biaxially oriented laminate polyester film (may be referred to as "laminate polyester film of the present invention" hereinafter) which comprises the first polyester layer and the second polyester layer which is the above single-layer polyester film of the present invention formed on at least one side of the first polyester layer.

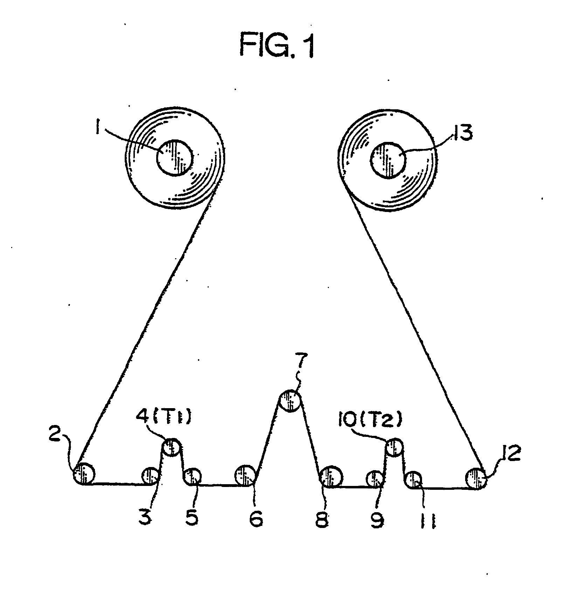

Fig. 1 is a schematic diagram of an apparatus for measuring the high-speed running scratch resistance and abrasion resistance of the biaxially oriented polyester film of the present invention.

A description is first given of the single-layer polyester film of the present invention.

The polyester in the present invention is a polyester comprising an aromatic dicarboxylic acid as a main acid component and an aliphatic glycol as a main glycol component. This polyester is substantially linear and has film-forming properties, especially film-forming properties by melt molding. Illustrative examples of the aromatic dicarboxylic acid include terephthalic acid, naphthalenedicarboxylic acid, isophthalic acid, diphenoxyethane dicarboxylic acid, diphenyldicarboxylic acid, diphenylether dicarboxylic acid, diphenylsulfone dicarboxylic acid, diphenyl ketone dicarboxylic acid and anthracene dicarboxylic acid. Illustrative examples of the aliphatic glycol include polymethylene glycols having 2 to 10 carbon atoms such as ethylene glycol, trimethylene glycol, tetramethylene glycol, pentamethylene glycol, hexamethylene glycol and decamethylene glycol; and alicyclic diols such as cyclohexane dimethanol.

In the present invention, the polyester preferably comprises alkylene terephthalate and/or alkylene naphthalate as a main constituent component(s).

The polyester is particularly preferably polyethylene terephthalate, polyethylene-2,6-naphthalate as well as a copolymer which comprises terephthalic acid and/or 2,6-naphthalenedicarboxylic acid in an amount of 80 mol% or more of the total of all dicarboxylic acid components and ethylene glycol in an amount of 80 mol% or more of the total of all glycol components. The polyester may contain an aromatic dicarboxylic acid other than terephthalic acid and/or 2,6-naphthalenedicarboxylic acid; an aliphatic dicarboxylic acid such as adipic acid or sebacic acid; or an alicyclic dicarboxylic acid such as cyclohexane-1,4-dicarboxylic acid, in an amount of 20 mol% or less of the total of all acid components. The polyester may also contain a glycol other than ethylene glycol; an aromatic diol such as hydroquinone, resorcin or 2,2-bis(4-hydroxyphenyl)propane; an aliphatic diol having an aromatic ring such as 1,4-dihydroxydimethylene benzene; or a polyalkylene glycol (polyoxyalkylene glycol) such as polyethylene glycol, polypropylene glycol or polytetramethylene glycol, in an amount of 20 mol% or less of the total of all glycol components.

The polyester in the present invention may be copolymerized with or bonded to a component derived from a oxycarboxylic acid exemplified by an aromatic oxyacid such as hydroxybenzoic acid or an aliphatic oxyacid such as ω-hydroxycaproic acid in an amount of 20 mol% or less of the total weight of a dicarboxylic acid component and an oxycarboxylic acid component.

The polyester in the present invention may also be copolymerized with a polycarboxylic acid or polyhydroxy compound having 3 or more hydroxyl groups, such as trimellitic acid or pentaerythritol, in such an amount that it is substantially linear, for example, in an amount of 2 mol% or less of the total of all acid components.

The polyester is known per se and can be produced by a method known per se.

The biaxially oriented polyester film of the present invention is formed from a polyester composition which comprises three different types of inert particles having different average particle diameters.

The first inert particles (to be referred to as "inert particles A" hereinafter) are crosslinked polymer particles having an average particle diameter $d_A$ of 0.8 to 1.6 µm and are contained in an amount of more than 0.0005 wt% and less than 0.001 wt%. If the average particle diameter $d_A$ and the content of the inert particles A are smaller than the above ranges, the effect of improving winding property is unsatisfactory. On the other hand, if the average particle diameter $d_A$ and the content are larger than the above ranges, the electromagnetic conversion characteristics of the obtained magnetic tape deteriorate and abrasion resistance thereof also degrades. The average particle diameter $d_A$ of the inert particles A is preferably in the range of 0.9 to 1.5 µm, more preferably 1.0 to 1.4 µm. The content of the inert particles A is preferably in the range of 0.0006 wt% or more and less than 0.001 wt%, more preferably 0.0007 wt% or more and less than 0.001 wt%.

The inert particles A are preferably at least one member selected from crosslinked silicone resin particles and crosslinked polystyrene particles because they have high affinity with a polyester and are so soft that an impact on protrusions is easily absorbed and protrusions hardly fall off at the time of a high-speed impact.

The inert particles A have an apparent Young's modulus of 10 to 100 kgf/mm$^2$, preferably 10 to 50 kgf/mm$^2$. If the inert particles A having the apparent Young's modulus of less than 10 kgf/mm$^2$ are contained in the film, the particles deform because they cannot stand stress at the time of stretching, thereby making it difficult to form high protrusions required to provide winding property. On the other hand, if the apparent Young's modulus is more than 100 kgf/mm$^2$, the particles become too hard, whereby impact resistance deteriorates and the particles easily fall off.

The second inert particles (to be referred to as "inert particles B" hereinafter) have an average particle diameter $d_B$ of 0.4 to 0.8 µm and are contained in an amount of 0.1 to 0.8 wt%. If the average particle diameter $d_B$ and the content of the inert particles B are smaller than the above ranges, the slipperiness of the obtained film deteriorates, whereby the film becomes difficult to wind and instable to run in a VTR. On the other hand, if the average particle diameter $d_B$ and the content are larger than the above ranges, abrasion resistance degrades. The average particle diameter $d_B$ of the inert particles B is preferably in the range of 0.4 to 0.7 µm, more preferably 0.4 to 0.6 µm. The content of the inert particles B is preferably in the range of 0.12 to 0.6 wt%, more preferably 0.15 to 0.4 wt%.

Preferable examples of the inert particles B include (1) silicon dioxide (including hydrates, quartz sand and quartz); (2) silicates containing 30 wt% or more of $SiO_2$ (such as amorphous or crystalline clay minerals, alumino silicate (including a baked product and hydrates), chrysotile, zircon and fly ash); (3) oxides of Mg, Zn, Zr and Ti; (4) sulfates of Ca and Ba; (5) phosphates (including monohydrogen salts and dihydrogen salts) of Li, Ba and Ca; (6) benzoates of Li, Na and K; (7) terephthalates of Ca, Ba, Zn and Mn; (8) titanates of Mg, Ca, Ba, Zn, Cd, Pb, Sr, Mn, Fe, Co and Ni; (9) chromates of Ba and Pb; (10) carbon (such as carbon black and graphite); (11) glass (such as glass powder and glass beads); (12) carbonates of Ca and Mg; and (13) fluorite. Of these, calcium carbonate is the most preferable.

Further, the third inert particles (to be referred to as "inert particles C" hereinafter) are inert inorganic particles having a Mohs hardness of 7 or more and an average particle diameter $d_C$ of 0.01 to 0.3 µm and are contained in an amount of 0.05 to 1.0 wt%. If the Mohs hardness of the inert inorganic particles C is less than 7, scratch resistance is unsatisfactory. The inert particles C are preferably aluminum oxide (alumina) or spinel-type oxide. The inert particles C may comprise only one type of particles or two or more types of particles. The inert particles C are preferably agglomerated particles having an average agglomeration rate of 2 to 20. If the average agglomeration rate is above or below the above range, scratch resistance is unsatisfactory. The average agglomeration rate is preferably in the range of 2 to 15, more preferably 2 to 10, the most preferably 2 or more and less than 5, from the viewpoint of the effect of improving scratch resistance.

If the inert particles C are agglomerated particles of aluminum oxide (alumina), the effect of improving scratch resistance when the alumina is θ-type crystals is larger than when it is not θ-type crystals. If the inert particles C are agglomerated particles of a spinel-type oxide, the effect of improving scratch resistance when the spinel-type oxide is $MgAl_2O_4$ is larger than when it is not $MgAl_2O_4$.

If the average particle diameter $d_C$ and the content of the inert particles C are smaller than the above ranges, the effect of improving scratch resistance is unsatisfactory. On the other hand, if the average particle diameter $d_C$ and the content are larger than the above ranges, the effect of improving scratch resistance is unsatisfactory or abrasion resistance deteriorates. The average particle diameter $d_C$ of the inert inorganic particles C is preferably in the range of 0.03 to 0.25 µm, more preferably 0.05 to 0.2 µm. The content of the inert inorganic particles C is preferably in the range of 0.1 to 0.7 wt%, more preferably 0.15 to 0.4 wt%, the most preferably 0.2 wt% or more and less than 0.25 wt%.

The biaxially oriented polyester film of the present invention contains the above three different types of inert particles A, B and C at the same time. The ratio ($d_A/d_B$) of the average particle diameter $d_A$ of the inert particles A (crosslinked polymer particles) to the average particle diameter $d_B$ of the inert particles B must satisfy the following expression (1).

$$1.5 \leqq d_A/d_B \leqq 3 \tag{1}$$

If the value of $d_A/d_B$ is smaller than 1.5, the effect of improving winding property is unsatisfactory. On the other hand, if the value is larger than 3, the effect of improving winding property is observed while the electromagnetic conversion characteristics of the obtained magnetic tape deteriorate and abrasion resistance thereof also degrades. The value of $d_A/d_B$ is preferably in the range of 1.7 to 2.7, more preferably 1.9 to 2.4.

That is, the value preferably satisfies the following expression (1)-1, more preferably the following expression (1)-2.

$$1.7 \leqq d_A/d_B \leqq 2.7 \tag{1}-1$$

$$1.9 \leqq d_A/d_B \leqq 2.4 \tag{1}-2$$

Further, the ratio (SRz/SRa) of the three-dimensional 10-point average roughness SRz to the three-dimensional center plane average roughness SRa of the biaxially oriented polyester film of the present invention must satisfy the following expression (2).

$$SRz/SRa \geqq 20 \tag{2}$$

If the value of SRz/SRa is smaller than 20, the effect of improving winding property is unsatisfactory.

The value of SRz/SRa preferably satisfies the following expression (2)-1.

$$SRz/SRa \geqq 22 \tag{2}-1$$

SRz/SRa is more preferably 24 or more.

SRa is preferably in the range of 10 to 25 nm, more preferably 10 to 23 nm, particularly preferably 10 to 21 nm.

SRz is preferably in the range of 300 to 600 nm, more preferably 320 to 550 nm, particularly preferably 340 to 500 nm.

Further, the center line average roughness Ra of the biaxially oriented polyester film of the present invention is preferably in the range of 10 to 25 nm, more preferably 11 to 22 nm, particularly preferably 12 to 20 nm. If the center line average roughness Ra is less than 10 nm, the surface becomes too flat, whereby the effect of improving winding property and travel durability is small. On the other hand, if the center line average roughness Ra is more than 25 nm, the surface is too rough, whereby the electromagnetic conversion characteristics of the obtained magnetic tape deteriorate.

The Young's modulus in a longitudinal direction of the biaxially oriented polyester film of the present invention is preferably 400 kgf/mm$^2$ or more, more preferably 450 kgf/mm$^2$ or more, and the Young's modulus in a transverse direction of the film is preferably 500 kgf/mm$^2$ or more, more preferably 600 kgf/mm$^2$ or more. If the Young's moduli in longitudinal and transverse directions are within the above ranges, the obtained film can be made thin enough for a long-time tape advantageously.

The biaxially oriented polyester film of the present invention preferably has a thickness of 3 to 25 μm, more preferably 5 to 25 μm, particularly preferably 10 to 20 μm.

A description is subsequently given of the laminate polyester film of the present invention.

The biaxially oriented laminate polyester film of the present invention comprises the first polyester layer and the second polyester layer which is the above biaxially oriented single-layer polyester film of the present invention formed on at least one side of the first polyester layer.

The laminate polyester film of the present invention has a laminate structure in which the single-layer polyester film of the present invention is formed on at least one side of the first layer made from another polyester as the second layer. The laminate structure is preferably a double-layer structure consisting of the second layer and the first layer or a three-layer structure consisting of the second layer, the first layer and the second layer. The three-layer structure is more preferable from the view point of production cost because a waste film generated in the production process of a polyester film can be collected and recycled by using or blending it into the first layer.

A description and examples of the polyester constituting the first layer are the same as those of the polyester constituting the second layer. The polyester of the first layer is preferably identical to the polyester of the second layer.

In the laminate film of the present invention, the first layer may not contain inert particles. However, if inert particles having an average particle diameter of 0.4 μm or more such as the above crosslinked polymer particles A or the inert particles B are contained in the first layer in such an amount ($W_B$) that satisfies the following expression, a waste film generated in the production process of the polyester film can be collected and used in the first layer advantageously.

$$W_B = W_A \times L_A/L_B \times R/(1-R)$$

wherein $W_A$ is the total content (wt%) of the crosslinked polymer A and the inert particles B in the second layer, $W_B$ is the content (wt%) of inert particles having an average particle diameter of 0.4 μm or more in the first layer, $L_A$ is the total thickness (μm) of the second layer, $L_B$ is the thickness (μm) of the first layer, and R is a numerical value of 0.3 to 0.7.

In the above expression, if R is larger than 0.7 or smaller than 0.3, a change in the content of the inert particles having an average particle diameter of 0.4 μm or more in the first layer is large when the collected film is used, with the result that a change in the surface roughness of the second layer is also large disadvantageously. R is preferably 0.4 to 0.6. The small-sized inert particles having an average particle diameter of less than 0.4 μm have a small influence upon the surface of the second layer even when they are contained in the first layer.

In the laminate film of the present invention, the center line average roughness Ra2 of the second layer is preferably in the range of 8 to 18 nm, more preferably 9 to 17 nm, particularly preferably 10 to 16 nm. If the center line average roughness Ra2 is less than 8 nm, the surface is too flat, whereby the effect of improving winding property and travel durability is small. On the other hand, if it is more than 18 nm, the surface is too rough, whereby the electromagnetic conversion characteristics of the obtained magnetic tape deteriorate.

Further, the laminate film preferably has a Young's modulus in a longitudinal direction of 400 kgf/mm2 or more, more preferably 450 kgf/mm2 or more. The laminate film preferably has a Young's modulus in a transverse direction of 500 kgf/mm2 or more, more preferably 600 kgf/mm2 or more. If the Young's moduli in longitudinal and transverse directions are within the above ranges, the obtained film can be made thin enough for a long-time tape advantageously.

The surface properties of the second layer of the laminate film of the present invention can be controlled to a specific range by adjusting the thickness of the second layer to a specific range. The thickness of the second layer is preferably in the range of 0.5 to 2.0 μm. If the thickness is larger than 2.0 μm, the resulting film has the same characteristic properties as those of a single-layer film. On the other hand, if the thickness is smaller than 0.50 μm, the particles fall off, abrasion resistance deteriorates and the surface is too flat, whereby travel durability and winding property are liable to degrade. The total thickness of the laminate film is preferably in the range of 3 to 25 μm, more preferably 5 to 25 μm, particularly preferably 10 to 20 μm.

As for what is not described of the laminate film of the present invention, it should be understood that the description of the single-layer film of the present invention or changes from the description which are obvious for those skilled in the art can be applied.

The biaxially oriented polyester film of the present invention (including both a single-layer film and a laminate film unless otherwise stated hereinafter) preferably has a winding property index of 150 or less at a winding speed of 200 m/min. If the biaxially oriented polyester film of the present invention which has a winding property index of 150 or less is used as a base film for a high-speed duplicator, the effect of improving winding property is remarkable. On the other hand, if the film having a winding property index of more than 150 is wound at a high speed, the wound film has a bad form with a non-uniform end or, in an extreme case, the film collapses during winding. The winding property index at a winding speed of 200 m/min is more preferably 130 or less, particularly preferably 100 or less.

Basically, the biaxially oriented polyester film of the present invention can be obtained in accordance with a conventionally known method or a method which has been accumulated in the industry. For example, the biaxially oriented polyester film can be obtained by producing an unstretched film and then biaxially stretching the film. The unstretched film can be obtained, for example, as an unstretched film having an intrinsic viscosity of 0.35 to 0.9 dl/g by melt-extruding a polyester into a film at a temperature of Tm (melting point) to (Tm + 70)°C and quench the film to solidify it.

This unstretched film can be formed into a biaxially oriented film in accordance with the production method of a biaxially oriented film which has been accumulated heretofore. For example, the biaxially oriented film can be produced by stretching the unstretched film to 2.5 to 7.0 times in a monoaxial direction (longitudinal or transverse direction) at a temperature of (Tg - 10) to (Tg + 70)°C (Tg: glass transition temperature of the polyester) and then to 2.5 to 7.0 times in a direction perpendicular to the above stretching direction (transverse direction when the film is first stretched in the longitudinal direction) at a temperature of Tg to (Tg + 70)°C. In this case, the area stretch ratio is preferably 9 to 32 times, more preferably 12 to 32 times. Either simultaneous biaxial stretching or sequential biaxial stretching may be used. The biaxially oriented film may be further heat-set at a temperature of (Tg + 70) to Tm° C. For example, a polyethylene terephthalate film is preferably heat-set at 190 to 230°C. The heat-setting time is 1 to 60 seconds, for example.

A laminate film can be obtained by producing an unstretched laminate film first and then biaxially stretching the film in the same manner as described above.

This unstretched laminate film can be produced by the production method of a laminate film which has been accumulated heretofore. For example, there can be employed a method in which a film layer forming the surface (second layer) and a film layer forming a core layer (first layer) are laminated together while they are in a molten state or in a solidified state by quenching. Stated more specifically, the unstretched laminate film can be produced by coextrusion or extrusion lamination, for example.

The biaxially oriented polyester film of the present invention is advantageously used as a base film for a magnetic recording medium.

The magnetic recording medium comprising the biaxially oriented polyester film of the present invention as a base film is provided as (i) a magnetic recording medium comprising the biaxially oriented single-layer polyester film of the present invention as a base film and a magnetic layer supported on one side of the film or (ii) a magnetic recording medium comprising the biaxially oriented laminate polyester film of the present invention as a base film and a magnetic layer supported on the second polyester layer of the laminate film.

The magnetic layer of the magnetic recording medium in the present invention is preferably formed by coating a magnetic coating comprising ferromagnetic powder dispersed in an organic binder. As the ferromagnetic powder used in the magnetic layer may be used a ferromagnetic material such as $\gamma$-Fe$_2$O$_3$, Co-containing $\gamma$-Fe$_2$O$_3$, Fe$_3$O$_4$, Co-containing Fe$_3$O$_4$, CrO$_2$ or barium ferrite.

The binder used together with the magnetic powder in the present invention is a known thermoplastic resin, thermosetting resin, reactive resin or a mixture of these resins. Specific examples of the binder include a vinyl chloride-vinyl acetate copolymer, vinyl chloride-vinylidene chloride copolymer, vinyl chloride-acrylonitrile copolymer, acrylate-acrylonitrile copolymer, acrylate-vinylidene chloride copolymer, acrylate-styrene copolymer, methacrylate-acrylonitrile copolymer, methacrylate-vinylidene chloride copolymer, methacrylate-styrene copolymer, urethane elastomer, polyvinyl fluoride, vinylidene chloride-acrylonitrile copolymer, butadiene-acrylonitrile copolymer, polyamide resins, polyvinylbutyral, cellulose derivatives (such as cellulose acetate butyrate, cellulose diacetate, cellulose triacetate, cellulose propionate and nitrocellulose), butylene-butadiene copolymer, polyester resins, chlorovinyl ether-acrylate copolymer, amino resins, various synthetic rubber-based thermoplastic resins and mixtures of these.

The magnetic coating may contain an abrasive such as $\alpha$-Al$_2$O$_3$; a conductive agent such as carbon black; a dispersant such as lecithin; a lubricant such as n-butyl stearate or lecithinic acid; a curing agent such as an epoxy resin; a solvent such as methyl ethyl ketone, methyl isobutyl ketone or toluene.

The method for forming the magnetic layer on the biaxially oriented polyester film may be air doctor coating, die coating, air-knife coating, squeeze coating, impregnation coating, reverse-roll coating, transfer roller coating, gravure coating, kiss-roll coating, cast coating or spray coating.

That is, the biaxially oriented polyester film of the present invention has excellent performance in terms of high-speed winding property, base surface flatness, abrasion resistance, all of which are required for a base film for a magnetic recording medium for a high-speed duplicator and have been improved, and abrasion resistance and travel durability against an inferior cassette half or guide pin. More preferably, when having a laminate structure, it has excellent electromagnetic conversion characteristics, can be produced at a low production cost, and is excellent in total performance and extremely useful for a magnetic recording medium.

Various physical properties and characteristic properties in the present invention were measured and defined in accordance with the following methods.

(1) Average particle diameter of particles (DP)

This is measured using the centrifugal particle size analyzer CP-50 of Shimadzu Corporation. A cumulative curve of the particles of each diameter and the amount thereof is calculated based on the obtained centrifugal sedimentation curve, and a particle diameter equivalent to 50 mass percent is read from the cumulative curve and taken as the average particle diameter (refer to "Book of Particle Size Measurement Technology" issued by Nikkan Kogyo Press, pp. 242-247, 1975).

(2) Apparent Young's modulus of particles

A diamond indenter is lowered at a fixed loading speed (29 mgf/sec) using the micro compression tester MCTM-201 of Shimadzu Corporation to apply external force to one particle. The apparent Young's modulus Y is obtained from a load P (kgf), the displacement Z (mm) of the indenter and the particle diameter d (mm) of the particle, all of which are values at the breakage of the particle, in accordance with the following equation. This operation is repeated 10 times and the mean of the 10 obtained values is taken as an apparent Young's modulus of particles.

$$Y = 2.8\, P/\pi dZ$$

(3) Average agglomeration rate of particles

A film containing particles is sliced in a sectional direction to prepare a small thin piece having a thickness of 100 nm. When the particles contained therein are observed through an transmission electron microscope (for example, JEM-1200EX of JEOL Ltd.) at a magnification of 100,000X, there can be observed the smallest particles which cannot be divided any smaller (primary particles). The number of primary particles which form an agglomerate particle (secondary particle) is counted out of 100 particles from this photo, and a value obtained by dividing the number of all the primary particles in the photo by the counted number is taken as an average agglomeration rate.

(4) Three-dimensional center plane average roughness (SRa), three-dimensional 10-point average roughness (SRz)

The three-dimensional surface profile of a film is drawn using a three-dimensional roughness meter (SE-3CK of Kosaka Laboratory Co., Ltd.) under the condition comprising a needle diameter of 2 $\mu$mR, a needle pressure of 30 mg, a measurement length of 1 mm, a sampling pitch of 2 $\mu$m, a cut-off of 0.25 mm, a magnification in a longitudinal direction of 20,000X, a magnification in a transverse direction of 200X and 100 scanning lines. A portion having an area $S_M$ on the center plane is extracted from the obtained profile, and orthogonal coordinate axes (X and Y axes) are placed on the center plane of the extracted portion and the axis perpendicular to the center plane is taken as a Z axis. A value obtained from the following equation is taken as SRa.

$$SRa = \frac{1}{S_M} \int_0^{L_X} \int_0^{L_Y} |f(x,y)|\, dxdy$$

wherein $S_M = L_X \times M_Y$
The interval between the average value of the heights of the highest to the fifth highest mountains and the average value of the depths of the deepest to the fifth deepest valleys of a plane parallel to the average line of a reference area portion extracted from the profile is taken as SRz.

(5) Surface roughness of film (Ra)

The center line average roughness (Ra) is defined by JIS B0601 and measured using the tracer-type surface roughness meter (SURFCORDER SE-30C) of Kosaka Laboratory Co., Ltd. in the present invention. The measurement conditions are as follows.

    (a) radius of tracer tip : 2 $\mu$m
    (b) measurement pressure : 30 mg
    (c) cut-off : 0.25 mm
    (d) measurement length : 2.5 mm
    (e) data filing: The measurement of the surface roughness of the same sample is repeated 6 times and the average of the measurement values excluding the largest value is taken as Ra.

(6) Abrasion resistance against calender'

The abrasion resistance of the running surface of a base film is evaluated using a three-stage mini-super calender. The calender is a three-stage calender having nylon roll(s) and steel roll(s), the treatment temperature 80°C, the line pressure applied to the film 300 kg/cm, and the film speed 100 m/min. The abrasion resistance of the base film is evaluated by stains adhered to the top roll of the calender after the film is caused to travel a total length of 4,000 m.

<5-grade criterion>

grade 1 :    no stains on nylon roll
grade 2 :    almost no stains on nylon roll ,
grade 3 :    slight stains on nylon roll but easily wiped off with dry cloth
grade 4 :    Stains on nylon roll are hardly wiped off with dry cloth but can be wiped off with a solvent such as acetone.
grade 5 :    Nylon roll is heavily stained and hardly cleaned even with a solvent.

(7) Abrasion resistance against blade

The edge of a blade (blade for an industrial razor tester of GKI in US) is applied vertically onto a film cut to a width of 1/2 inch at a temperature of 20°C C and a humidity of 60 % and pushed to the film at a depth of 2 mm to be contacted with the film. The film is caused to travel (or subjected to friction) at a rate of 100 m/min and an inlet tension $T_1$ of 80 g. After the film travels 100 m, the amount of abrasion dusts adhered to the blade is evaluated.

<criterion>

⊚ :      The width of the abrasion dust adhered to the edge of the blade is smaller than 0.3 mm.
○ :      The width of the abrasion dust adhered to the edge of the blade is 0.3 mm or more and smaller than 0.6 mm.
∆ :      The width of the abrasion dust adhered to the edge of the blade is 0.6 mm or more and smaller than 1.0 mm.
✕ : The    width of the abrasion dust adhered to the edge of the blade is 1.0 mm or more.

(8) High-speed running scratch resistance, abrasion resistance

These are measured using the apparatus shown in Fig. 1 as follows.
In Fig. 1, reference numeral 1 denotes a feed reel, 2 a tension controller, 3, 5, 6, 8, 9 and 11 free rollers, 4 a tension detector (inlet), 7 a fixed rod, 10 a tension detector (outlet), 12 a guide roller and 13 a take-up reel.
At a temperature of 20° C and a humidity of 60 %, a film cut to a width of 1/2 inch is brought into contact with the fixed rod 7 at an angle θ of 60° and caused to travel 200 m at a rate of 300 m/min so that the tension at inlet becomes 50 g. After running, abrasion dusts adhered to the fixed rod 7 and the scratch of the film are evaluated.
Method A uses a sufficiently surface-finished 6-φ tape guide (surface roughness Ra = 0.015 µm) made from SUS 304 as the fixed rod.
Method B uses a 6-φ tape guide, prepared by bending a SUS sintered plate into a cylindrical form and not sufficiently surface-finished (surface roughness Ra = 0.15 µm), as the fixed rod.
Method C uses a 6-φ tape guide made from carbon black-containing polyacetal as the fixed rod.

<criterion of abrasion resistance>

⊚ :    No abrasion dusts were observed.
○ :    A slight amount of abrasion dust was observed.
∆ :    The existence of abrasion dust was noticed at first sight.
✕ :    Abrasion dust was heavily adhered.

<criterion of scratch resistance>

⊚ :    No scratch was seen.
○ :    One to five scratches were seen.
∆ :    Six to 15 scratches were seen.
✕ :    Sixteen or more scratches were seen.

(9) Low-speed repeated running friction coefficient (μk), scratch resistance

These are measured using the apparatus shown in Fig. 1 as follows.
At a temperature of 20°C and a humidity of 60 %, the non-magnetic surface of a magnetic tape is brought into contact with the fixed rod 7 at an angle θ of (152/180) π radian (152°) and moved (or subjected to friction) thereon at a rate of 200 cm/min. The outlet tension (T$_2$:g) when the tension controller 2 is adjusted to ensure that inlet tension T$_1$ becomes 50 g is detected by the outlet tension detector after the film has made 50 round trips and the running friction coefficient μk is calculated from the following expression.

$$\mu k = (2.303/\theta)\log(T_2/T_1) = 0.868\log(T_2/35)$$

When the film is caused to travel repeatedly in a VTR with the running friction coefficient (μk) of 0.25 or more, running becomes instable. Therefore, a film having a running friction coefficient of 0.25 or more is evaluated as deficient in running durability.
Method A uses a sufficiently surface-finished 6-φ tape guide (surface roughness Ra = 0.015 μm) made from SUS 304 as the fixed rod.
Method B uses a 6-φ tape guide, prepared by bending a SUS sintered plate into a cylindrical form and not sufficiently surface-finished (surface roughness Ra = 0.15 μm), as the fixed rod.
Method C uses a 6-φ tape guide made from carbon black-containing polyacetal as the fixed rod.
The scratch resistance of the non-magnetic surface of the traveled tape is evaluated based on the following criterion.

<criterion of scratch resistance>

ⓞ : No scratch was seen.
○ : One to five scratches were seen.
△ : Six to 15 scratches were seen.
✕ : Sixteen or more scratches were seen.

A magnetic tape is produced as follows.
A hundred parts by weight (to be simply referred to as "parts" hereinafter) of γ-Fe$_2$O$_3$ and the following composition are kneaded and dispersed in a ball mill for 12 hours.

| | |
|---|---|
| polyester urethane | 12 parts |
| vinyl chloride-vinyl acetate-maleic anhydride copolymer | 10 parts |
| α-alumina | 5 parts |
| carbon black | 1 part |
| butyl acetate | 70 parts |
| methyl ethyl ketone | 35 parts |
| cyclohexanone | 100 parts |
| After dispersion, | |
| fatty acid: oleic acid | 1 part |
| fatty acid: palmitic acid | 1 part |
| fatty acid ester (amyl stearate) | 1 part |

are further added and kneaded for 10 to 30 minutes. Then, 7 parts of an ethyl acetate solution containing 25% of a triisocyanate compound is further added and dispersed by shearing at a high speed for one hour to prepare a magnetic coating solution.
The obtained coating solution is applied to a polyester film to ensure that the thickness of a dry film becomes 2.5 μm.
Thereafter, the coated film is oriented in a DC magnetic field and dried at 100° C. After dried, the film is calendered and slit to a width of 1/2 inch to obtain a magnetic tape.

(10) Winding property index

A 1/2-inch-wide film is caused to pass through the apparatus shown in Fig. 1 without making contact with the fixed rod 7 and to travel 200 m at a rate of 200 m/min at a temperature of 20°C and a humidity of 60 %, and the edge position of the film is detected by a CCD camera at a location right before the film is taken up by the take-up reel 13.
Variation amount in the edge position of the film is expressed as a waveform with respect to the time axis and the winding property index is calculated from the waveform based on the following expression:

$$\text{winding property index} = \sqrt{\frac{1}{t}\int_{0}^{1}f(x)^2 dx}$$

wherein t is a measurement time (sec) and x is a variation amount in the edge position (μm).

(11) Winding property

The magnetic tape produced by the above method is caused to pass through the apparatus shown in Fig. 1 without making contact with the fixed rod 7 and to travel 500 m at a rate of 400 m/min, and the winding property of the tape is evaluated by whether the tape can be taken up by the take-up reel and by the shape of the roll of the wound magnetic tape.

<criterion>

○ : Non-uniformity in the edge of the wound roll is 2 mm or less.
Δ : Non-uniformity in the edge of the wound roll is more than 2 mm.
× : The tape cannot be wound.

(12) Electromagnetic conversion characteristics

A VHS-system VTR (BR6400 of Victor Company of Japan, Ltd.) is remodeled and a 4-MHz sinusoidal wave is input into a read/write head through an amplifier, recorded on a magnetic tape and reproduced, and the reproduced signal is input into a spectrum analyzer. Noise generated at a location 0.1 MHz away from 4 MHz of the carrier signal is measured and the carrier/noise ratio (C/N) is expressed in units of dB. The electromagnetic conversion characteristics of the above magnetic tape are measured using this method, and the difference between this value and the value of the film obtained in Comparative Example 8 as a reference (±0 dB) is taken as electromagnetic conversion characteristics.

Examples

The following examples are given to further illustrate the present invention.

Examples 1 to 4 and comparative Examples 1 to 12

An ester interchange reaction was carried out by adding 0.038 parts of manganese acetate tetrahydrate to a mixture of 100 parts of dimethyl terephthalate and 70 parts of ethylene glycol while the temperature was gradually elevated from 150°C to 240°C. When the reaction temperature reached 170° C, 0.040 parts of antimony trioxide was added and additive particles shown in Tables 1 and 3 were also added in amounts shown in Tables 1 and 3. After the end of the ester interchange reaction, 0.049 parts of phosphorous acid was added. Thereafter, the reaction product was transferred to a polymerization reactor, the temperature was elevated to 290°C, and a polycondensation reaction was carried out at a pressure of 0.2 mmHg or less to give polyethylene terephthalate having an intrinsic viscosity (orthochlorophenol, 35°C) of 0.56.
The pellets of this polyethylene terephthalate were dried at 170°C for 3 hours, supplied to the hopper of an extruder and molten at a temperature of 280 to 300°C in the extruder. The molten polymer was subjected to a surface finish of ca. 0.3 s through a 1-mm slit die and extruded onto a rotary cooling drum having a surface temperature of 20°C to give a 200-μm-thick unstretched film.

The thus obtained unstretched film was preheated at 75°C, stretched to 3.2 times between low-speed and high-speed rolls while heated with three IR heaters having a surface temperature of 800°C 15 mm above the film, quenched and then supplied to a stenter to be stretched to 4.3 times in a transverse direction at 120°C. The obtained biaxially oriented film was heat-set at 205°C for 5 seconds to give a 14-μm-thick heat-set biaxially oriented polyester film.

Examples 5 to 7

To obtain polyethylene terephthalate for the second layer (to be referred to as "layer A" hereinafter) of a laminate film, the same inert particles and method as those used in Example 1 were used in Examples 5 and 6 while the same inert particles and method as those used in Example 2 were used in Example 7.

Polyethylene terephthalate for the first layer (to be referred to as "layer B" hereinafter) of the laminate film was obtained in the same manner as in Example 1 except that no particles were added.

The pellets of these polyethylene terephthalates were dried at 170°C for 3 hours, supplied to the hoppers of two extruders and molten at a temperature of 280 to 300°C. The molten polymers were laminated together using a multimanifold coextrusion die in such a manner that the layer A was formed on both sides of the layer B. The resulting laminate film was subjected to a surface finish of ca. 0.3 s and extruded onto a rotary cooling drum having a surface temperature of 20°C to give a 200-μm-thick unstretched laminate film.

The thus obtained unstretched laminate film was stretched and heat-set in the same manner as in Example 1 to give a 14-μm-thick heat-set biaxially oriented laminate polyester film.

The thickness of each layer of the film was adjusted by changing the amounts of discharges of the two extruders. The thickness of each layer was obtained by using both a fluorescent X-ray method and a method for searching for an interface between the layers in the sliced film with a transmission electron microscope.

The characteristic properties of the thus obtained film are shown in Tables 2 and 4.

As is clear from Tables 2 and 4, the biaxially oriented polyester film of the present invention shows not only excellent electromagnetic conversion characteristics, winding property and abrasion resistance but also excellent scratch resistance, abrasion resistance and travel durability against various tape guides. Thus, it can be said that it has extremely excellent overall properties.

Table 1

| | | inert particles in layer A | | | | |
|---|---|---|---|---|---|---|
| | | crosslinked polymer particles A | | | inert particles B | |
| | | type of particles, average particle diameter($d_A$) (µm) | content of particles (%) | apparent Young's modulus of particles (kg/mm$^2$) | type of particles, average particle diameter ($d_B$) (µm) | content of particles (%) |
| Ex.1 | | silicone resin 1.2 | 0.0006 | 50 | calcium carbonate 0.6 | 0.15 |
| Ex.2 | | silicone resin 1.2 | 0.0008 | 50 | calcium carbonate 0.6 | 0.15 |
| Ex.3 | | silicone resin 1.2 | 0.0009 | 50 | calcium carbonate 0.6 | 0.15 |
| Ex.4 | | silicone resin 1.2 | 0.0006 | 50 | calcium carbonate 0.6 | 0.15 |
| Ex.5 | | silicone resin 1.2 | 0.0006 | 50 | calcium carbonate 0.6 | 0.15 |
| Ex.6 | | silicone resin 1.2 | 0.0006 | 50 | calcium carbonate 0.6 | 0.15 |
| Ex.7 | | silicone resin 1.2 | 0.0008 | 50 | calcium carbonate 0.6 | 0.15 |

Ex.: Example

Table 1 (continued)

| | inert particles in layer A | | | ratio of average particle diameter of particles A to that of particles B $d_A/d_B$ |
| | inert inorganic particles C | | | |
| | type of particles, average particle diameter ($d_c$) (µm) | content of particles (%) | average agglomeration rate of particles | |
|---|---|---|---|---|
| Ex.1 | $\theta$-type aluminum oxide 0.1 | 0.2 | 4.5 | 2.0 |
| Ex.2 | $\theta$-type aluminum oxide 0.1 | 0.2 | 4.5 | 2.0 |
| Ex.3 | $\theta$-type aluminum oxide 0.1 | 0.2 | 4.5 | 2.0 |
| Ex.4 | spinel oxide ($MgAl_2O_4$) 0.1 | 0.2 | 4.2 | 2.0 |
| Ex.5 | $\theta$-type aluminum oxide 0.1 | 0.2 | 4.5 | 2.0 |
| Ex.6 | $\theta$-type aluminum oxide 0.1 | 0.2 | 4.5 | 2.0 |
| Ex.7 | $\theta$-type aluminum oxide 0.1 | 0.2 | 4.5 | 2.0 |

Ex.: Example

EP 0 950 681 B1

Table 2

| | thickness of layer A (µm) | thickness of layer B (µm) | SRz/SRa | Ra (nm) | calender abrasion resistance (grade) | blade abrasion resistance | high-speed running | | | | | |
|---|---|---|---|---|---|---|---|---|---|---|---|---|
| | | | | | | | scratch resistance | | | abrasion resistance | | |
| | | | | | | | method A | method B | method C | method A | method B | method C |
| Ex.1 | 14.0 | - | 25 | 12 | 1 | ◎ | ◎ | ◎ | ◎ | ◎ | ◎ | ◎ |
| Ex.2 | 14.0 | - | 24 | 13 | 1 | ◎ | ◎ | ◎ | ◎ | ◎ | ◎ | ◎ |
| Ex.3 | 14.0 | - | 24 | 13 | 1 | ◎ | ◎ | ◎ | ◎ | ◎ | ◎ | ◎ |
| Ex.4 | 14.0 | - | 25 | 12 | 1 | ◎ | ◎ | ◎ | ◎ | ◎ | ◎ | ◎ |
| Ex.5 | 1.5 | 11.0 | 27 | 11 | 1 | ◎ | ◎ | ◎ | ◎ | ◎ | ◎ | ◎ |
| Ex.6 | 1.0 | 12.0 | 30 | 10 | 1 | ◎ | ◎ | ◎ | ◎ | ◎ | ◎ | ◎ |
| Ex.7 | 1.0 | 12.0 | 28 | 11 | 1 | ◎ | ◎ | ◎ | ◎ | ◎ | ◎ | ◎ |

Ex.: Example

EP 0 950 681 B1

Table 2 (continued)

| | low-speed repeated running | | | | | | winding property index | winding property | electromagnetic conversion characteristics |
|------|--------|--------|--------|--------|--------|--------|------|------|------|
| | scratch resistance | | | running friction coefficient μk | | | | | |
| | method A | method B | method C | method A | method B | method C | | | C/N |
| Ex.1 | ◎ | ◎ | ◎ | 0.23 | 0.22 | 0.22 | 80 | ○ | +1.6 |
| Ex.2 | ◎ | ◎ | ◎ | 0.22 | 0.22 | 0.21 | 70 | ○ | +1.5 |
| Ex.3 | ◎ | ◎ | ◎ | 0.22 | 0.21 | 0.21 | 70 | ○ | +1.4 |
| Ex.4 | ◎ | ◎ | ◎ | 0.23 | 0.22 | 0.22 | 80 | ○ | +1.6 |
| Ex.5 | ◎ | ◎ | ◎ | 0.23 | 0.22 | 0.22 | 90 | ○ | +1.8 |
| Ex.6 | ◎ | ◎ | ◎ | 0.24 | 0.23 | 0.23 | 100 | ○ | +2.0 |
| Ex.7 | ◎ | ◎ | ◎ | 0.23 | 0.23 | 0.22 | 90 | ○ | +1.9 |

Ex.: Example

EP 0 950 681 B1

## Table 3

| | inert particles in layer A | | | | |
| | crosslinked polymer particles A | | | inert particles B | |
| | type of particles, average particle diameter ($d_A$) (μm) | content of particles (%) | apparent Young's modulus of particles ($kg/mm^2$) | type of particles, average particle diameter ($d_B$) (μm) | content of particles (%) |
|---|---|---|---|---|---|
| Comparative Example 1 | - | - | - | calcium carbonate 0.6 | 0.2 |
| Comparative Example 2 | - | - | - | calcium carbonate 0.4 | 0.2 |
| Comparative Example 3 | silicone resin 1.2 | 0.0005 | 50 | - | - |
| Comparative Example 4 | silicone resin 1.2 | 0.0005 | 50 | calcium carbonate 0.6 | 0.2 |
| Comparative Example 5 | silicone resin 0.7 | 0.0005 | 50 | calcium carbonate 0.6 | 0.2 |
| Comparative Example 6 | silicone resin 2.0 | 0.0009 | 50 | calcium carbonate 0.6 | 0.2 |
| Comparative Example 7 | silicone resin 1.2 | 0.00005 | 50 | calcium carbonate 0.6 | 0.2 |
| Comparative Example 8 | silicone resin 1.2 | 0.01 | 50 | calcium carbonate 0.6 | 0.2 |
| Comparative Example 9 | spherical silica 1.2 | 0.0008 | 200 | calcium carbonate 0.6 | 0.2 |
| Comparative Example 10 | silicone resin 1.2 | 0.0005 | 50 | calcium carbonate 0.6 | 0.2 |
| Comparative Example 11 | silicone resin 1.0 | 0.0005 | 50 | calcium carbonate 0.8 | 0.2 |
| Comparative Example 12 | silicone resin 1.2 | 0.0005 | 50 | calcium carbonate 0.6 | 1.2 |

EP 0 950 681 B1

## Table 3 (continued)

| | inert particles in layer A | | | ratio of average particle diameter of particles A to that of particles B $d_A/d_B$ |
| | inert inorganic particles C | | | |
| | type of particles, average particle diameter ($d_C$) ($\mu$m) | content of particles (%) | average agglomeration rate of particles | |
|---|---|---|---|---|
| Comparative Example 1 | $\theta$-type aluminum oxide 0.1 | 0.2 | 4.5 | - |
| Comparative Example 2 | $\theta$-type aluminum oxide 0.1 | 0.2 | 4.5 | - |
| Comparative Example 3 | $\theta$-type aluminum oxide 0.1 | 0.2 | 4.5 | - |
| Comparative Example 4 | - | - | - | 2.0 |
| Comparative Example 5 | $\theta$-type aluminum oxide 0.1 | 0.2 | 4.5 | 1.2 |
| Comparative Example 6 | $\theta$-type aluminum oxide 0.1 | 0.2 | 4.5 | 3.3 |
| Comparative Example 7 | $\theta$-type aluminum oxide 0.1 | 0.2 | 4.5 | 2.0 |
| Comparative Example 8 | $\theta$-type aluminum oxide 0.1 | 0.2 | 4.5 | 2.0 |
| Comparative Example 9 | $\theta$-type aluminum oxide 0.1 | 0.2 | 4.5 | 2.0 |
| Comparative Example 10 | spherical silica 0.1 | 0.2 | 1.5 | 2.0 |
| Comparative Example 11 | $\theta$-type aluminum oxide 0.1 | 0.2 | 4.5 | 1.3 |
| Comparative Example 12 | $\theta$-type aluminum oxide 0.1 | 0.2 | 4.5 | 2.0 |

EP 0 950 681 B1

## Table 4

| | thickness of layer A (μm) | thickness of layer B (μm) | SRz / SRa | Ra (nm) | calender abrasion resistance (grade) | blade abrasion resistance | high-speed running | | | | | |
|---|---|---|---|---|---|---|---|---|---|---|---|---|
| | | | | | | | scratch resistance | | | abrasion resistance | | |
| | | | | | | | method A | method B | method C | method A | method B | method C |
| C.Ex.1 | 14.0 | − | 18 | 15 | 1 | ◎ | ◎ | ◎ | ◎ | ◎ | ◎ | ◎ |
| C.Ex.2 | 14.0 | − | 15 | 12 | 1 | ◎ | ◎ | ◎ | ◎ | ◎ | ◎ | ◎ |
| C.Ex.3 | 14.0 | − | 50 | 7 | 1 | ◎ | ○ | ◎ | △ | ○ | ◎ | △ |
| C.Ex.4 | 14.0 | − | 20 | 15 | 1 | ◎ | × | × | △ | ○ | ○ | ○ |
| C.Ex.5 | 14.0 | − | 18 | 15 | 1 | ◎ | ◎ | ◎ | ◎ | ◎ | ◎ | ◎ |
| C.Ex.6 | 14.0 | − | 38 | 16 | 4 | △ | ◎ | ◎ | ◎ | ○ | ○ | ○ |
| C.Ex.7 | 14.0 | − | 18 | 15 | 1 | ◎ | ◎ | ◎ | ◎ | ◎ | ◎ | ◎ |
| C.Ex.8 | 14.0 | − | 29 | 15 | 4 | × | ◎ | ◎ | ◎ | ◎ | ◎ | ◎ |
| C.Ex.9 | 14.0 | − | 20 | 15 | 4 | △ | △ | △ | × | △ | △ | × |
| C.Ex.10 | 14.0 | − | 20 | 15 | 1 | ◎ | △ | △ | △ | △ | △ | △ |
| C.Ex.11 | 14.0 | − | 17 | 17 | 1 | ◎ | ◎ | ◎ | ○ | ◎ | ◎ | ○ |
| C.Ex.12 | 14.0 | − | 22 | 27 | 5 | × | ○ | ○ | ○ | ○ | △ | ○ |

C.Ex: Comparative Example

EP 0 950 681 B1

EP 0 950 681 B1

The biaxially oriented polyester film of the present invention is excellent in winding property; base surface

Table 4 (continued)

| | scratch resistance | | | running friction coefficient μk | | | winding property index | winding property | electromagnetic conversion characteristics C/N |
|---|---|---|---|---|---|---|---|---|---|
| | method A | method B | method C | method A | method B | method C | | | |
| C.Ex.1 | ◎ | ◎ | ◎ | 0.21 | 0.21 | 0.21 | 160 | △ | +1.1 |
| C.Ex.2 | ◎ | ◎ | ◎ | 0.23 | 0.23 | 0.24 | 200 | × | +1.7 |
| C.Ex.3 | ○ | ◎ | △ | 0.32 | 0.31 | 0.31 | 170 | △ | +2.4 |
| C.Ex.4 | × | × | △ | 0.23 | 0.23 | 0.22 | 110 | ○ | +1.0 |
| C.Ex.5 | ◎ | ◎ | ◎ | 0.21 | 0.21 | 0.20 | 160 | △ | +1.0 |
| C.Ex.6 | ◎ | ◎ | ◎ | 0.22 | 0.22 | 0.21 | 60 | ○ | -0.1 |
| C.Ex.7 | ◎ | ◎ | ◎ | 0.21 | 0.21 | 0.20 | 160 | △ | +1.1 |
| C.Ex.8 | ◎ | ◎ | ◎ | 0.21 | 0.21 | 0.20 | 60 | ○ | 0 |
| C.Ex.9 | ○ | ○ | × | 0.22 | 0.22 | 0.28 | 110 | ○ | +0.9 |
| C.Ex.10 | △ | △ | △ | 0.22 | 0.22 | 0.24 | 110 | ○ | +1.0 |
| C.Ex.11 | ◎ | ◎ | ○ | 0.21 | 0.21 | 0.22 | 160 | △ | +0.5 |
| C.Ex.12 | ○ | ○ | ○ | 0.20 | 0.20 | 0.21 | 80 | ○ | -2.5 |

20

flatness, abrasion resistance, all of which are required for a base film for a magnetic tape for a high-speed duplicator, and abrasion resistance and travel durability against an inferior cassette half or guide pine. Further, it can be produced at a low production cost and has extremely excellent total performance as a base film for a magnetic recording medium.

**Claims**

1. A biaxially oriented polyester film of a polyester composition which comprises:

   a) more than 0.0005 wt% and less than 0.001 wt% of crosslinked polymer particles having an average particle diameter $d_A$ of 0.8 to 1.6 μm and an apparent young's modulus of 10 to 100 kgf/mm$^2$;
   b) 0.1 to 0.8 wt% of inert particles having an average particle diameter $d_B$ of 0.4 to 0.8 μm; and
   c) 0.05 to 1.0 wt% of inert inorganic particles having an average particle diameter $d_C$ of 0.01 to 0.3 μm,

   wherein the film satisfies the following expressions (1) and (2):

   $$1.5 \leqq d_A/d_B \leqq 3 \tag{1}$$

   wherein $d_A$ and $d_B$ are defined the same as above,

   $$SRz/SRa \geqq 20 \tag{2}$$

   wherein SRz is the three-dimensional 10-point average roughness of the film surface and SRa is the three-dimensional center plane average roughness of the film surface,
   and the inert inorganic particles having an average particle diameter $d_C$ have a Mohs hardness of at least 7.

2. The biaxially oriented polyester film of claim 1, wherein the crosslinked polymer particles are at least one member selected from the group consisting of crosslinked silicone particles and crosslinked polystyrene particles.

3. The biaxially oriented polyester film of claim 1, wherein the inert particles having an average particle diameter $d_B$ are calcium carbonate.

4. The biaxially oriented polyester film of claim 1, wherein the inert inorganic particles having an average particle diameter $d_C$ are at least one member selected from the group consisting of aluminum oxide and spinel-type oxide particles.

5. The biaxially oriented polyester film of claim 4, wherein the inert inorganic particles having an average particle diameter $d_C$ are agglomerated particles and have an average agglomeration rate of 2 to 20.

6. The biaxially oriented polyester film of claim 1, wherein the crosslinked polymer particles and the inert particles having an average particle diameter $d_B$ satisfy the following expression (1)-1:

   $$1.7 \leqq d_A/d_B \leqq 2.7 \tag{1-1}$$

   wherein $d_A$ and $d_B$ are defined the same as above.

7. The biaxially oriented polyester film of claim 1, which satisfies the following expression (2)-1:

   $$SRz/SRa \geqq 22 \tag{2-1}$$

   wherein SRz and SRa are defined the same as above.

8. The biaxially oriented polyester film of claim 1, whose surface has a three-dimensional center plane average roughness SRa of 10 to 25 nm.

9. The biaxially oriented polyester film of claim 1, whose surface has a center line average roughness Ra of 10 to 25 nm.

10. The biaxially oriented polyester film of claim 1, whose surface has a three-dimensional 10-point average roughness SRz of 300 to 600 nm.

11. The biaxially oriented polyester film of claim 1, which has a winding property index of 150 or less at a winding speed of 200 m/min.

12. The biaxially oriented polyester film of claim 1, which has a thickness of 3 to 25 μm.

13. The biaxially oriented polyester film of claim 1, which has a thickness of 5 to 25 μm.

14. A biaxially oriented laminate polyester film, which comprises the first polyester layer and the second polyester layer which is the biaxially oriented polyester film of claim 1 formed on at least one side of the first polyester layer.

15. The biaxially oriented laminate polyester film of claim 14, wherein the second polyester layer has the center line average roughness $Ra^2$ of 8 to 18 nm at the surface which is not in contact with the first polyester layer.

16. The biaxially oriented laminate polyester film of claim 14, which has a winding property index of 150 or less at a winding speed of 200 m/min.

17. The biaxially oriented laminate polyester film of claim 14, wherein the second polyester layer has a thickness of 0.5 to 2.0 μm.

18. The biaxially oriented laminate polyester film of claim 14, which has a thickness of 3 to 25 μm.

19. The biaxially oriented polyester film of claim 1, which is used as a base film for a magnetic recording medium.

20. The biaxially oriented laminate polyester film of claim 14, which is used as a base film for a magnetic recording medium.

21. A magnetic recording medium comprising the biaxially oriented polyester film of claim 1 as a base film and a magnetic layer supported on one side of the film.

22. A magnetic recording medium comprising the biaxially oriented laminate polyester film of claim 14 as a base film and a magnetic layer supported on the second polyester layer of the laminate film.

**Patentansprüche**

1. Biaxial orientierte Polyesterfolie einer Polyesterzusammensetzung, die umfasst:

a) mehr als 0,0005 Gew.-% und weniger als 0,001 Gew.-% vernetzte Polymerteilchen mit einem mittleren Teilchendurchmesser $d_A$ von 0,8 bis 1,6 μm und einem scheinbaren Young'schen Modul von 10 bis 100 kgf/$mm^2$;
b) 0,1 bis 0,8 Gew.-% inerte Teilchen mit einem mittleren Teilchendurchmesser $d_B$ von 0,4 bis 0,8 μm und
c) 0,05 bis 1,0 Gew.-% inerte anorganische Teilchen mit einem mittleren Teilchendurchmesser $d_C$ von 0,01 bis 0,3 μm, wobei die Folie den nachstehenden Ausdrücken (1) und (2) genügt:

$$1,5 \leq d_A/d_B \leq 3 \tag{1}$$

worin $d_A$ und $d_B$ die Gleichen wie vorstehend definiert sind,

$$SRz/SRa \geq 20 \qquad (2)$$

worin SRz eine dreidimensionale mittlere 10-Punkte-Rauheit einer Folienoberfläche darstellt und SRa die dreidimensionale mittlere Rauheit der mittigen Ebene der Folienoberfläche darstellt,
und die inerten anorganischen Teilchen mit einem mittleren Teilchendurchmesser $d_C$ eine Mohs'sche Härte von mindestens 7 aufweisen.

2. Biaxial orientierte Polyesterfolie nach Anspruch 1, wobei die vernetzten Polymerteilchen mindestens ein Mitglied, ausgewählt aus der Gruppe, bestehend aus vernetzten Siliconteilchen und vernetzten Polystyrolteilchen, sind.

3. Biaxial orientierte Polyesterfolie nach Anspruch 1, wobei die inerten Teilchen mit einem mittleren Teilchendurchmesser $d_B$ Calciumcarbonat sind.

4. Biaxial orientierte Polyesterfolie nach Anspruch 1, wobei die inerten anorganischen Teilchen mit einem mittleren Teilchendurchmesser $d_C$ mindestens ein Mitglied, ausgewählt aus der Gruppe, bestehend aus Aluminiumoxid und Oxiden vom Spinelltyp, sind.

5. Biaxial orientierte Polyesterfolie nach Anspruch 4, wobei die inerten anorganischen Teilchen mit einem mittleren Teilchendurchmesser $d_C$ agglomerierte Teilchen sind und eine mittlere Agglomerationsrate von 2 bis 20 aufweisen.

6. Biaxial orientierte Polyesterfolie nach Anspruch 1, wobei die vernetzten Polymerteilchen und die inerten Teilchen mit einem mittleren Teilchendurchmesser $d_B$ dem nachstehenden Ausdruck (1)-1 genügen:

$$1,7 \leq d_A/d_B \leq 2,7 \qquad (1)\text{-}1$$

worin $d_A$ und $d_B$ die Gleichen wie vorstehend definiert sind.

7. Biaxial orientierte Polyesterfolie nach Anspruch 1, die dem nachstehenden Ausdruck (2)-1 genügt:

$$SRz/SRa \geq 22 \qquad (2)\text{-}1$$

worin SRz und SRa die Gleichen wie vorstehend definiert sind.

8. Biaxial orientierte Polyesterfolie nach Anspruch 1, deren Oberfläche eine dreidimensionale mittlere Rauheit der mittigen Ebene, SRa, im Bereich von 10 bis 25 nm aufweist.

9. Biaxial orientierte Polyesterfolie nach Anspruch 1, deren Oberfläche eine mittlere Mittellinienrauheit Ra im Bereich von 10 bis 25 nm aufweist.

10. Biaxial orientierte Polyesterfolie nach Anspruch 1, deren Oberfläche eine dreidimensionale mittlere Zehn-Punkte-Rauheit SRz von 300 bis 600 nm aufweist.

11. Biaxial orientierte Polyesterfolie nach Anspruch 1, die einen Aufwickeleigenschaftsindex von 150 oder weniger bei einer Aufwickelgeschwindigkeit von 200 m/min aufweist.

12. Biaxial orientierte Polyesterfolie nach Anspruch 1, die eine Dicke von 3 bis 25 µm aufweist.

13. Biaxial orientierte Polyesterfolie nach Anspruch 1, die eine Dicke von 5 bis 25 µm aufweist.

14. Biaxial orientierte Laminatpolyesterfolie, die die erste Polyesterschicht und die zweite Polyesterschicht umfasst, die die biaxial orientierte Polyesterfolie nach Anspruch 1, gebildet auf mindestens einer Seite der ersten Polyesterschicht, darstellt.

15. Biaxial orientierte Laminatpolyesterfolie nach Anspruch 14, wobei die zweite Polyesterschicht die mittlere Mittel-

linienrauheit Ra$^2$ von 8 bis 18 nm an der Oberfläche aufweist, die nicht in Kontakt mit der ersten Polyesterschicht steht.

**16.** Biaxial orientierte Laminatpolyesterfolie nach Anspruch 14, die einen Aufwikkeleigenschaftsindex von 150 oder weniger bei einer Aufwickelgeschwindigkeit von 200 m/min aufweist.

**17.** Biaxial orientierte Laminatpolyesterfolie nach Anspruch 14, wobei die zweite Polyesterschicht eine Dicke von 0,5 bis 2,0 μm aufweist.

**18.** Biaxial orientierte Laminatpolyesterfolie nach Anspruch 14, die eine Dicke von 3 bis 25 μm aufweist.

**19.** Biaxial orientierte Polyesterfolie nach Anspruch 1, die als eine Grundfolie für ein magnetisches Aufzeichnungsmedium verwendet wird.

**20.** Biaxial orientierte Laminatpolyesterfolie nach Anspruch 14, die als eine Grundfolie für ein magnetisches Aufzeichnungsmedium verwendet wird.

**21.** Magnetisches Aufzeichnungsmedium, umfassend die biaxial orientierte Polyesterfolie nach Anspruch 1 als eine Grundfolie und eine magnetische Schicht, getragen auf einer Seite der Folie.

**22.** Magnetisches Aufzeichnungsmedium, umfassend die biaxial orientierte Laminatpolyesterfolie nach Anspruch 14 als eine Grundfolie und eine magnetische Schicht, getragen auf der zweiten Polyesterschicht der Laminatfolie.

**Revendications**

**1.** Film polyester à orientation biaxiale d'une composition polyester qui comprend:

(a) plus de 0,0005% en poids et moins de 0,001% en poids de particules de polymère réticulé ayant un diamètre de particules moyen $d_A$ de 0,8 à 1,6 μm et un module de Young apparent de 10 à 100 kgf/mm;
(b) 0,1 à 0,8% en poids de particules inertes ayant un diamètre de particules moyen $d_B$ de 0,4 à 0,8 μm; et
(c) 0,05 à 1,0% en poids de particules inorganiques inertes ayant un diamètre de particules moyen $d_C$ de 0,1 à 0,3 μm,

dans lequel le film satisfait aux relations (1) et (2) suivantes:

$$1,5 \leq d_A/d_B \leq 3 \tag{1}$$

où $d_A$ et $d_B$ sont les mêmes que définis ci-dessus,

$$SRz/SRa \geq 20 \tag{2}$$

où SRz est la rugosité moyenne en 10 points tridimensionnelle de la surface de film et SRa est la rugosité moyenne tridimensionnelle plane du centre de la surface de film,
et les particules inorganiques inertes ayant un diamètre de particules moyen $d_C$ ont une dureté de Mohs d'au moins 7.

**2.** Film polyester à orientation biaxiale selon la revendication 1, dans lequel les particules de polymère réticulé sont au moins un élément choisi dans le groupe constitué de particules de silicone réticulée et de particules de polystyrène réticulé.

**3.** Film polyester à orientation biaxiale selon la revendication 1, dans lequel les particules inertes ayant un diamètre moyen de particules $d_B$ sont du carbonate de calcium.

**4.** Film polyester à orientation biaxiale selon la revendication 1, dans lequel les particules inertes inorganiques ayant un diamètre de particules moyen $d_C$ sont au moins un élément choisi dans le groupe constitué d'oxyde d'aluminium et de particules d'oxyde du type spinelle.

5. Film polyester à orientation biaxiale selon la revendication 4, dans lequel les particules inertes inorganiques ayant un diamètre de particules moyen $d_C$ sont des particules agglomérées et ont un taux moyen d'agglomération de 2 à 20.

6. Film polyester à orientation biaxiale selon la revendication 1, dans lequel particules de polymère réticulé et les particules inertes ayant un diamètre de particules moyen $d_B$ satisfait la relation (1)-1 suivante:

$$1,7 \leq d_A/d_B \leq 2,7 \qquad\qquad (1)\text{-}1$$

où $d_A$ et $d_B$ sont les mêmes que défini ci-dessus.

7. Film polyester à orientation biaxiale selon la revendication 1, qui satisfait la relation (2)-1 suivante:

$$SRz/SRa \geq 22 \qquad\qquad (2)\text{-}1$$

où SRz et SRa sont les mêmes que défini ci-dessus.

8. Film polyester à orientation biaxiale selon la revendication 1, dont la surface possède une rugosité moyenne de plan central tridimensionnelle SRa de 10 à 25 nm.

9. Film polyester à orientation biaxiale selon la revendication 1, dont la surface possède une rugosité moyenne de la ligne centrale Ra de 10 à 25 nm.

10. Film polyester à orientation biaxiale selon la revendication 1, dont la surface possède une rugosité moyenne sur 10 points tridimensionnelle SRz de 300 à 600 nm.

11. Film polyester à orientation biaxiale selon la revendication 1, qui possède un indice de propriété d'enroulement de 150 ou moins à une vitesse d'enroulement de 200 m/min.

12. Film polyester à orientation biaxiale selon la revendication 1, qui possède une épaisseur de 3 à 25 µm.

13. Film polyester à orientation biaxiale selon la revendication 1, qui possède une épaisseur de 5 à 25 µm.

14. Film polyester stratifié à orientation biaxiale, qui comprend la première couche polyester et la deuxième couche polyester qui est le film polyester à orientation biaxiale selon la revendication 1 formé sur au moins un côté de la première couche polyester.

15. Film polyester stratifié à orientation biaxiale selon la revendication 14, dans lequel la deuxième couche polyester possède la rugosité moyenne de la ligne centrale $Ra^2$ de 8 à 18 nm à la surface qui n'est pas en contact avec la première couche polyester.

16. Film polyester stratifié à orientation biaxiale selon la revendication 14, qui possède un indice de propriété d'enroulement de 150 ou moins à une vitesse d'enroulement de 200 m/min.

17. Film polyester stratifié à orientation biaxiale selon la revendication 14, dans lequel la deuxième couche polyester possède une épaisseur de 0,5 à 2,0 µm.

18. Film polyester stratifié à orientation biaxiale selon la revendication 14, qui possède une épaisseur de 3 à 25 µm.

19. Film polyester à orientation biaxiale selon la revendication 1, qu'on utilise en tant que film de base pour un milieu d'enregistrement magnétique.

**20.** Film polyester stratifié à orientation biaxiale selon la revendication 14, qu'on utilise en tant que film de base pour un milieu d'enregistrement magnétique.

**21.** Milieu d'enregistrement magnétique comprenant le film polyester à orientation biaxiale selon la revendication 1 en tant que film de base et une couche magnétique supportée sur un côté du film.

**22.** Milieu d'enregistrement magnétique comprenant le film polyester stratifié à orientation biaxiale selon la revendication 14 en tant que film de base et une couche magnétique supportée sur la deuxième couche polyester du film stratifié.

# FIG. 1